# EUROPEAN PATENT SPECIFICATION

(11) **EP 2 447 061 B1**
(45) Date of publication and mention of the grant of the patent: **16.03.2016**
(21) Application number: 11187207.3
(22) Date of filing: 28.10.2011
(51) Int. Cl.: B32B 37/08, B32B 27/12, B32B 11/00, D06N 5/00

(54) **Bituminous membrane production system and method**
System und Verfahren zur Herstellung von bitumenhaltigen Membranen
Système et procédé de production de membrane bitumineuse

(30) Priority: 28.10.2010 IT TV20100142
(43) Date of publication of application: 02.05.2012
(73) Proprietor: Euroline S.R.L., Maserada Sul Piave (IT)
(72) Inventor: Fornasier, Antonio, 31048 SAN BIAGIO DI CALLALTA (IT); Pavan, Alessandro, 31052 LANZAGO DI SILEA (IT)
(74) Representative: Bergadano, Mirko

(56) References cited:
- FR-A1- 2 340 203
- US-A- 1 481 430
- US-A1- 2005 130 519

## Description

The present invention relates to the production of bituminous membranes or sheaths.

Systems are known for producing bituminous-based membranes or sheaths usable particularly in construction field for protective and/or insulation purposes. The bituminous mix used in these production processes is normally produced by blending a mixture of bitumen comprising hydrocarbons, natural or derived from oil distillation or refining, with APP-based (APP: acronym of atactic polypropylene) and/or SBS-based (SBS: acronym of styrene butadiene styrene) polymeric material and/or polyolefines and/or additional resins.

Systems of this sort substantially comprise a membrane forming station and a membrane cooling/finishing station.

The forming station, in particular, comprises an impregnating tank containing the above bituminous mix in liquid form at a temperature of roughly 190°C; and a feed unit, which receives a polyester supporting film, immerses the film in the tank along a given immersion path to impregnate the two opposite faces of the film with the bituminous mix in controlled manner, and feeds out a homogeneous bituminous strip impregnated with a semisolid bituminous mix of given thickness.

The cooling/finishing station comprises a cooling tank containing cooling water at a given cooling temperature; a traction unit comprising a number of traction rollers at the input and output of the cooling tank; and a strip finishing unit located at the cooling tank output rollers to process the strip to obtain a cooled, finished membrane.

The traction unit is structured for receiving at entrance the semisolid impregnated bituminous strip, for feeding the strip forward so that its lower face is immersed in the cooling water contained in the cooling tank so as to float on the water, and for supplying the partly-cooled bituminous strip to the finishing unit.

Depending on the type of membrane produced, the finishing unit is structured for applying grit or sand or a cover film to the upper face of the partly-cooled strip to obtain the finished membrane.

Systems of this sort pose various technical problems.

First of all, the strip cooling process implemented at the cooling/finishing station deeply affects the membrane overall production time.

Aiming to reduce the cooling time, the Applicant has conducted several tests to increase the strip travelling speed and the heat exchange between the strip and the cooling water contained in the tank. These tests have revealed that, in the systems referred above, there are at least two constraints preventing faster cooling of the bituminous strip.

One is the existence of a maximum speed at which the bituminous strip can be fed through the cooling tank. Testing by the Applicant, in fact, shows that, over and above this maximum speed, the strip emerges only partly cooled, and therefore still partly semisolid, with the result that it sticks to the contact surfaces of components/rollers at the finishing station, thus making it necessary to shut down the system periodically to clean the finishing station.

The other is poor heat exchange between the bituminous strip and the cooling water in the cooling tank.

More specifically, the cooling tank is normally fitted at the bottom with a number of nozzles connected hydraulically to cooling circuits, such as chillers or cooling towers.

As a result, the water temperature in the tank is distributed 'in layers', i.e. varies from one depth to another. More specifically, the temperature of the water at the bottom of the tank corresponds to the actual cooling temperature produced by the cooling circuit, and normally ranges between 25 and 28°C; whereas the surface layer of water contacting he bituminous strip is at a temperature of 40°C, i.e. lower than the surface temperature of the strip, but higher than the actual cooling temperature in the bottom layer.

To improve cooling of the surface layer of water contacting the bituminous strip, it has been proposed to generate a stirring motion to mix the water in the tank and so improve heat exchange between the high-temperature surface layer and the low-temperature bottom layer of water.

Tests by the Applicant, however, show that stirring the water in the tank produces unevenness/flaws, such as cavities or lumps, on the smooth surface of the strip, thus resulting in poor-quality membranes.

The above production process also has the drawback of being painstakingly complex when producing membranes with two smooth faces. In which case, it involves first cooling the lower face of the bituminous strip in a first cooling tank; turning the bituminous strip over so its upper face contacts the water; and then cooling the upper face in a second tank.

Once turned over, the bituminous strip must be repositioned in the cooling tank, which can only be done by shutting down the system, thus increasing membrane production time.

Extensive research has been carried out by the Applicant to find a solution by which to :
- cool the bituminous strip faster;
- control cooling of the strip more accurately, to improve its finish; and
- reduce the cost and size of the cooling station.
It is important to note that the above systems have extremely large cooling tanks, reaching roughly 16-20 metres in length, 1.5 metres in width, and 10-15 centimetres in height.

FR 2 340 203 discloses a system for producing a bituminous strip provided with two rotating rollers 4a and 4b which are parallel to each other and are able to move forward respective polyethylene films.

During the advance of the polyethylene films, a certain amounts of bitumen is poured between the rotating rollers 4a and 4b to make the bituminous strip 6. Afterwards the roller 4a immerses the bituminous strip 6 in the tank 10 containing cooling fluid to cause the bituminous strip 6 to be cooled.

US 1,481,430 discloses a system to manufacture an asphalt roofing wherein a sheet is passed over and around a number of rolls one of which, indicated with 10, is partially dipped in a bath containing water in which is suspended some fine mineral powder. During the advance of the sheet, roller 10 applies the fine mineral powder to the under side of the sheet.

The object of the present invention is to provide a solution designed to achieve the above goals.

According to the present invention, there is provided a bituminous membrane production system as claimed in the accompanying Claims.

According to the present invention, there is also provided a bituminous membrane cooling/finishing station as claimed in Claim 8.

According to the present invention, there is provided a bituminous membrane production method comprising the steps of: a) receiving a bituminous strip made from a semisolid bituminous mix; b) feeding the bituminous strip in a given travelling direction; and c) cooling at least one of the major surfaces of the bituminous strip as it moves forward; and wherein step c) comprises the steps of: providing at least one cooling roller which rotates about an axis crosswise to the travelling direction of the bituminous strip; wetting the outer cooling surface of the cooling roller with a cooling fluid; rotating the cooling roller about said crosswise axis, so that the cooling fluid on the outer cooling surface comes into contact with one of the major surfaces of the bituminous strip as the cooling roller rotates.

Preferably, the method comprises positioning the cooling roller so that said outer cooling surface is slightly spaced from a major surface of the bituminous strip, and comprises the step of controlling the rotation speed of the cooling roller so that the cooling fluid adheres to and forms on the outer cooling surface a surface layer of cooling fluid, which is brought into contact with the major surface of the bituminous strip as the cooling roller rotates.

The method preferably comprises providing a cooling fluid tank; and positioning the cooling roller in the tank so that the cooling roller is at least partly immersed in the cooling fluid in the tank.

The method preferably comprises providing sprinkling means for sprinkling the cooling fluid onto said outer cooling surface, so that the cooling fluid is evenly distributed over the portion of the outer cooling surface intended to contact said major surface of the bituminous strip for cooling.

The method preferably comprises providing a finishing device designed to feed a cover film onto the cooling roller, so that, as the cooling roller rotates, a mating face of the cover film is positioned contacting the major surface of the bituminous strip, and the opposite face is positioned contacting the cooling fluid layer on the outer cooling surface of the cooling roller.

The method preferably comprises the step of rotating the cooling roller at a rotation speed lower than the travelling speed of the bituminous strip.

The method preferably comprises the step of measuring the temperature of the bituminous strip at at least one point; and adjusting the rotation speed of the cooling roller as a function of the temperature measured.

The method preferably comprises moving the cooling roller in said travelling direction as a function of the temperature measured.

The method preferably comprises the step of moving the cooling roller to and from the bituminous strip, in a direction perpendicular to the bituminous strip plane, between a work position in which the outer cooling surface skims the major surface of the bituminous strip, and a rest position in which the major surface of the bituminous strip is detached from the outer cooling surface by a distance greater than said thickness of the cooling fluid layer.

A non-limiting embodiment of the present invention will be described by way of example with reference to the accompanying drawings, in which :
Figure 1 shows schematically a bituminous membrane production system realized in accordance with the teachings of the present invention;
Figure 2 shows schematically a different embodiment of the cooling/finishing station of the Figure 1 bituminous membrane production system;
Figure 3 shows schematically a cooling device of the Figure 1 and 2 system;
Figure 4 shows a schematic of a different embodiment of the Figure 1 system cooling device.

The present invention will now described in details with reference to the attached drawings, to enable a skilled person to realize and use such invention. As will be clear to an expert, changes may be made to the embodiments described, and the general principles described may be applied to other embodiments and applications without departing from the protective scope of the invention as defined in the accompanying Claims. In other words, the present invention is in no way intended as being restricted to the embodiments described, and shall be accorded the widest scope compatible with the principles and characteristics described and claimed herein.

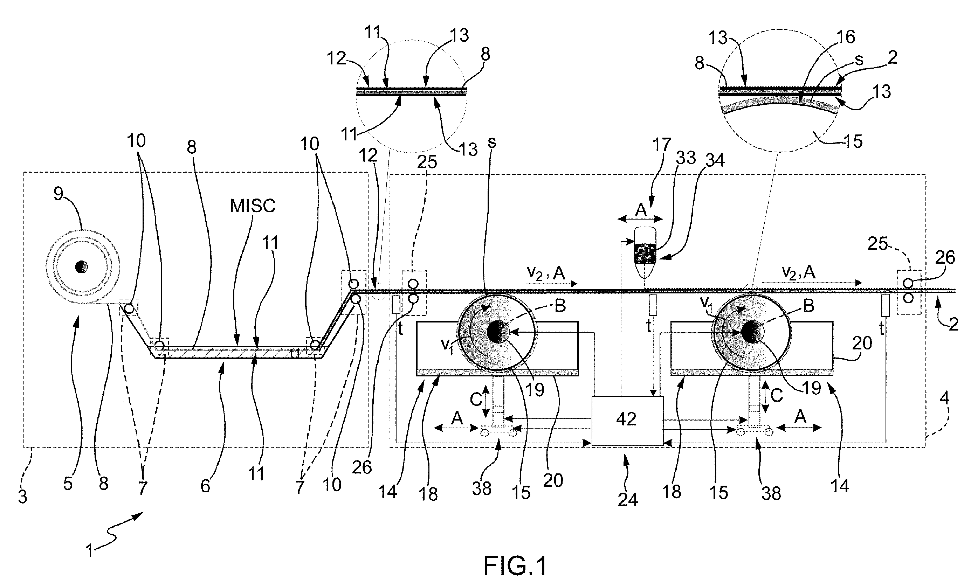

Figure 1 shows a schematic of a non-limiting embodiment of a system 1 for producing bituminous mix-based membranes or sheaths 2.

Membrane 2 is conveniently designed for use in the construction industry, for protecting and/or insulating buildings, such as homes, or parts of buildings, such as roofs, walls, etc.

Membrane 2 preferably comprises one or more bituminous mixes containing, for example, hydrocarbons - either natural or derived from oil distillation or refining - and/or SBS and/or APP and/or polyolefins and/or additional resins.

Membrane production system 1 in the Figure 1 example substantially comprises a forming station 3; and a cooling/finishing station 4 for supplying the cooled/finished membrane 2.

Forming station 3 in the Figure 1 example comprises an unwinding device 5, an impregnating tank 6, and a traction device 7.

Unwinding device 5 unwinds a supporting film 8 of flexible material off a reel 9 fitted to a rotary shaft of unwinding device 5; and impregnating tank 6 contains the bituminous mix MIX in liquid form at a given temperature of, say, roughly 190°C. Supporting film 8 may be made, for example, of polyester, glass fibre, jute, or any other similar material.

Traction device 7 comprises a number of powered traction rollers 10 located along a given impregnating path of supporting film 8, and which are able to receive, at input of tank 6, the supporting film 8 designed to form the core of membrane 2; to immerse the supporting film 8 in tank 6 along the given impregnating path, so the bituminous mix adheres in controlled manner to the two opposite major faces 11 of supporting film 8; and to supply, at output of tank 6, a bituminous strip 12 made of semisolid bituminous mix.

As shown in the Figure 1 example, strip 12 may preferably comprise three superimposed layers : a centre layer defined by supporting film 8; and two opposite outer layers defined by the two layers of bituminous mix adhering to the centre layer, and the exposed faces of which define the two major surfaces 13 of bituminous strip 12.

Forming station 3 is known and therefore not described in detail.

Cooling/finishing station 4 is designed to : receive the semisolid bituminous strip 12 at the input; feed bituminous strip 12 in a given travelling direction A; and cool at least one of the two opposite major surfaces 13 of bituminous strip 12, as it is fed forward, to supply membrane 2 at the output.

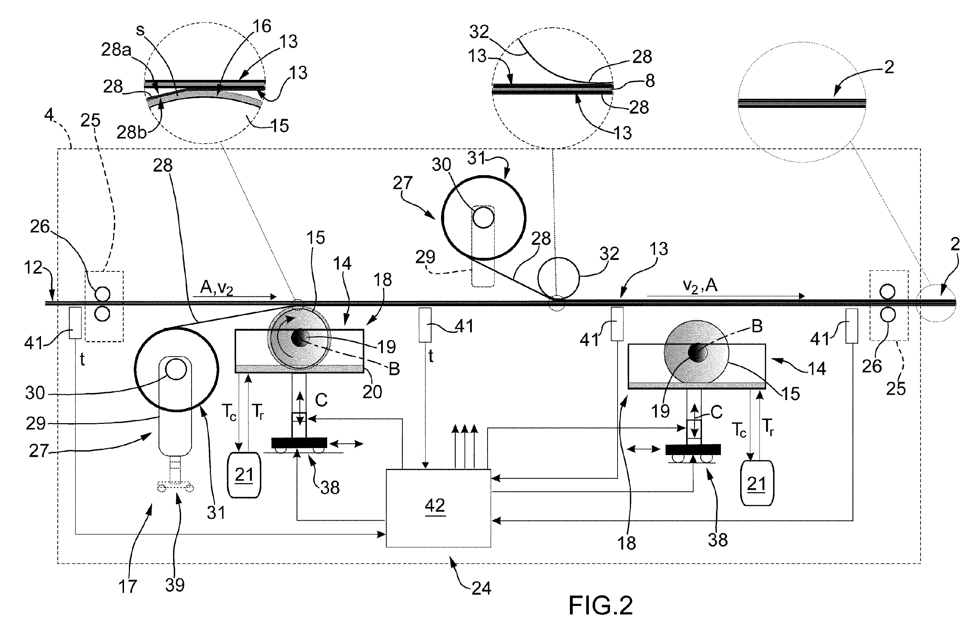

As shown in Figures 1 and 2, cooling/finishing station 4 preferably, though not necessary, comprises a feed device 25 for feeding bituminous strip 12 in the given travelling direction A; and one or more strip cooling devices 14, each located along the path/travelling direction A of bituminous strip 12 to cool one of the two major surfaces 13 of bituminous strip 12.

As shown in Figures 1, 2 and 3, the strip cooling device 14 comprises at least one cooling roller 15, which rotates freely about an axis B substantially crosswise to travelling direction A of strip 12, and is positioned so that its outer cooling surface 16 is slightly spaced from a major surface 13 of strip 12.

Strip cooling device 14 also comprises a cooling fluid source 18, which cooperates with cooling roller 15 to wet and/or immerse outer cooling surface 16 of cooling roller 15 with/in the cooling fluid.

The cooling fluid may preferably comprise water or any other similar fluid suitable for cooling a layer of bituminous mix.

Strip cooling device 14 also comprises drive means 19, such as an electric motor or any other similar drive unit connected mechanically by an output shaft to cooling roller 15, and which rotates cooling roller 15 about axis B so that, as cooling roller 15 rotates, the cooling fluid on outer cooling surface 16 is brought into contact with one of major surfaces 13 of bituminous strip 12.

Strip cooling device 14 also comprises an electronic control system 24, which controls drive means 19 to rotate cooling roller 15 at such a speed v₁ that, as cooling roller rotates 15, the cooling fluid remains cohesive/adheres to outer cooling surface 16 of cooling roller 15 to form a fluid layer s, which is brought into contact with the major surface 13 of bituminous strip 12 for cooling.

In connection with the above, it should be pointed out that, as cooling roller 15 rotates, the cooling fluid adheres to outer cooling surface 16 by virtue of the surface tension between the cooling fluid and the material of cooling roller 15, thus forming fluid layer s. To ensure high surface tension between the cooling fluid and outer cooling surface 16, cooling roller 15 may be made of metal or any similar material, and the cooling fluid may comprise water.

Cooling roller 15 may also be designed with a completely smooth outer cooling surface 16.

In a different embodiment (not shown), cooling roller 15 may conveniently be designed with an at least partly embossed or grooved outer cooling surface 16, which has the advantage of enabling cooling roller 15, as it cools strip 12, to also form an embossed finish/grooves on major surface 13 of bituminous strip 12. In addition, a grooved outer cooling surface 16 of cooling roller 15 conveniently increases the amount of cooling fluid fed onto major surface 13 of strip 12.

In the Figure 1, 2 and 3 example, cooling fluid source 18 comprises a cooling fluid tank 20, and cooling roller 15 is fitted to a supporting frame (not shown) so that outer cooling surface 16 is at least partly immersed in the cooling fluid in tank 20.

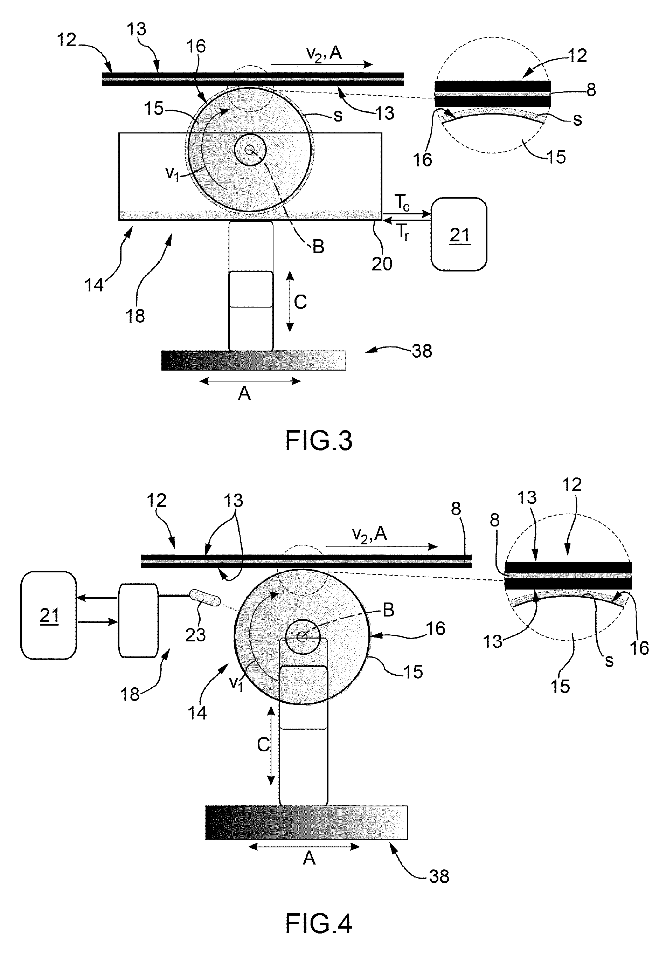

In the Figure 2 and 3 example, tank 20 is connected to an external cooling system 21 by a hydraulic circuit comprising a number of connecting pipes. External cooling system 21 may, for example, comprise a chiller or cooling tower (not shown) or any other similar cooling device which is designed to receive the cooling fluid heated to the temperature t=Tc in tank 20; to cool the cooling fluid; and to feed the cooling fluid cooled to a given cooling temperature t=Tr back to tank 20.

In a different embodiment of the invention shown in Figure 4, instead of tank 20, cooling fluid source 18 comprises sprinklers 23 for sprinkling cooling fluid in controlled manner onto outer cooling surface 16 of cooling roller 15, so the cooling fluid is evenly distributed on the portion of outer cooling surface 16 of cooling roller 15 intended to contact major surface 13 of bituminous strip 12.

Sprinklers 23 may preferably comprise one or more spray nozzles, which receive the cooling fluid from external cooling system 21, and break it up into a jet of given shape.

Sprinklers 23 may preferably be designed so that the spray nozzles spray a given amount of cooling fluid in controlled manner onto outer cooling surface 16. The overall shape of the jet from the spray nozzles may be such that the cooling fluid evenly flows, i.e. is distributed evenly, over outer cooling surface 16 of cooling roller 15 designed to contact major surface 13 of bituminous strip 12.

In the example shown, feed device 25 comprises a number of powered traction rollers 26 located in travelling direction A, with respective axes of rotation crosswise to direction A.

Powered traction rollers 26 may be arranged in pairs in travelling direction A, so as to receive the semisolid bituminous strip 12 from forming station 3 at the input, and supply the cooled, finished membrane 2 at the output.

In connection with the above, it should be pointed out that, in one possible embodiment, cooling/finishing station 4 may have no feed device 25, and system 1 may comprise a main traction unit (not shown) located downstream from tank 20, and which cooperates with traction device 7 of forming station 3 to feed bituminous strip 12 in travelling direction A and keep it taut in a plane over cooling devices 14.

In the Figure 2 example, cooling/finishing station 4 also comprises a finishing system 17, in turn comprising a finishing device 27, which feeds a cover film 28 to a cooling device 14, so that, as cooling roller 15 rotates, cover film 28 is inserted between major surface 13 of bituminous strip 12 and outer cooling surface 16 of cooling roller 15.

In the Figure 2 example, the finishing device 27 preferably comprises a support assembly 29 with a rotary shaft 30 fitted with a roll 31 of cover film; and an unwinding mechanism (not shown), which cooperates with support assembly 29 to unwind the cover film in controlled manner off the roll 31 as bituminous strip 12 moves forward, so that cover film 28 is fixed by cooling roller 15 to the lower major surface 13 of bituminous strip 12.

The cover film may preferably be made of plastic, such as nylon, polyester, or any other similar material that melts homogeneously with the bituminous material of membrane 2 when flamed, for example, by a gas torch.

Finishing device 27 is designed to feed cover film 28 to cooling device 14, so that cover film 28 is positioned with a mating face 28a contacting major surface 13 of bituminous strip 12, and with the opposite face 28b contacting cooling fluid layer s on outer surface 16 of cooling roller 15.

Finishing device 27 may be located beneath bituminous strip 12, alongside cooling device 14, to fix cover film 28 to the lower major surface 13 of bituminous strip 12.

Finishing device 27 may also be located over bituminous strip 12, and comprise an auxiliary roller 32, which cooperates with support assembly 29 to fix cover film 28 to the upper major surface 13 of bituminous strip 12.

As shown in Figure 1, finishing system 17 may also comprise at least one grit/sand spreading unit 33, which, in the Figure 1 example, comprises a grit/sand tank 34 with a bottom grit/sand outlet; and a spreader (not shown) located at the bottom outlet to spread/pour grit/sand evenly onto the upper major surface 13 of bituminous strip 12 and form a granular top cover layer, i.e. a granular surface finish.

Cooling/finishing station 4 may preferably comprise electric actuating means 38, such as electric actuators and/or powered carriages running along respective guides, to move cooling device 14, on command and in travelling direction A, into any position along bituminous strip 12.

Electric actuating means 38 also provide for moving cooling device 14, on command and in a direction C, between a work position, in which cooling roller 15 is positioned with cooling fluid layer s contacting major surface 13, and a rest position, in which cooling roller 15 is detached from bituminous strip 12, and outer cooling surface 16 is separated from bituminous strip 12 by a distance greater than the thickness of cooling fluid layer s.

It is opportune to specify that the electric actuating means 38 may be connected to cooling device 14 so as to move the cooling roller 15 and/or tank 20 independently of one another in direction C. For example, electric actuating means 38 may leave cooling roller 15 in the work position, and withdraw tank 20 from strip 12, so cooling roller 15 is not immersed in/wetted by the cooling fluid.

Cooling/finishing station 4 may preferably comprise electric actuating means 39, such as electric actuators and/or powered carriages running along respective guides, to move finishing device 27 and/or grit/sand spreading units 33, on command and in travelling direction A, into any position along bituminous strip 12.

Electronic control system 24 may comprise a number of temperature sensors 41 located along travelling direction A and positioned facing and/or contacting major surface 13 of bituminous strip 12 to measure its temperature t at one or more points; and at least one electronic control unit 42 which is configured to control each cooling roller 15 so as to keep its rotation speed substantially equal to rotation speed v₁.

Electronic control unit 42 may also be designed to control electric actuating means 38, so that each cooling device 14 is moved in travelling direction A into a position where the measured temperature t corresponds to a predetermined temperature.

Electronic control unit 42 may also be designed to control electric actuating means 38, so that each cooling device 14 is moved in direction C into the work position or rest position as a function of the temperature t measured at a given point along bituminous strip 12.

Electronic control unit 42 may also be designed to control electric actuating means 39, so that each finishing device 27 and/or grit/sand spreading unit 34 is moved in travelling direction A into a position where the measured temperature t corresponds to a given temperature.

Electronic control unit 42 may also be designed to control feed device 25 to feed the bituminous strip at a given speed v₂ (e.g. in metres/minute) preferably higher than rotation speed v₁ (e.g. in metres/minute) of cooling roller 15. In the Figure 1 example, cooling roller 15 preferably rotates in the strip travelling direction, and speed v₂ is twice rotation speed v₁, i.e. V₂=2*v₁.

As shown in the Figure 1 example, membrane production system 1 may comprise a number of cooling devices 14 arranged along bituminous strip 12 for cooling.

Electronic control unit 42 is also designed to move each cooling device 14 into the work position or rest position to cool specific portions of bituminous strip 12 on the basis of the temperature t measured by sensors 41 at different points along bituminous strip 12.

Operation of bituminous membrane production system 1 will be clear from the above description with no further explanation required, except to state that it provides substantially for cooling/finishing station 4 : receiving the semisolid bituminous strip 12 (at a temperature of roughly 170-180°C) from forming station 3; feeding bituminous strip 12 in travelling direction A; and cooling at least one of the two major surfaces 13 of bituminous strip 12 as it moves forward. The cooling step comprises the steps of : providing at least one cooling roller 15, which rotates about axis B crosswise to travelling direction A of bituminous strip 12; wetting the outer cooling surface 16 of cooling roller 15 with cooling fluid; and rotating cooling roller 15 about axis B, so that, as cooling roller 15 rotates, the cooling fluid on outer cooling surface 16 is brought into contact with one of the major surfaces 13 of bituminous strip 12.

In particular, cooling roller 15 is positioned so that outer cooling surface 16 is slightly spaced from a major surface 13 of bituminous strip 12; and there are comprised the steps of controlling the drive means 19 so that the cooling roller 15 reaches a rotation speed v₁ such that the cooling fluid adheres to and forms, on outer cooling surface 16, a surface layer s of cooling fluid which, as cooling roller 15 rotates, is brought into contact with major surface 13 of bituminous strip 12.

System 1 described has numerous advantages.

In particular, it provides for improving heat exchange between the membrane and cooling fluid, by the rotating cooling roller feeding onto the roughly 170-180°C major surface of the strip a continuous stream of cooling fluid drawn by the roller itself from the bottom of the tank and therefore at a low cooling temperature of normally about 26°C, i.e. equal to the temperature of the fluid supply from the external cooling system.

In addition, the cooling capacity of system 1 can be adjusted by altering the number of cooling devices and/or controlling their work or rest positions in the strip travelling direction.

By improving heat exchange, the system provides for cooling, and so producing, the membrane faster.

The water drawn by the rotating roller onto the major surface of the membrane provides not only for cooling it, but also for smoothing out any flaws, such as surface pitting or blistering.

The fact that the cooling roller applies the cover film to the strip as the strip is being cooled provides, on the one hand, for reducing elastic flow of the bituminous material, and, on the other, for improving grip of the film to the strip surface.

Because of the improvement in heat exchange made by the rollers, the system described is smaller than known systems, by employing a number of small tanks, as opposed to one large tank. In this connection, it is important to note that, whereas the cooling tanks of known systems, as stated, are roughly 16-20 metres long and 1.5 metres wide, each tank 20 in the system described is roughly 1.5 metres long, 30 centimetres wide, and 15-20 centimetres deep.

Finally, strip cooling in the travelling direction can be controlled accurately by positioning the cooling devices on the basis of a target strip cooling curve. By controlling cooling and monitoring the temperature at different points along the strip, the spreading unit can be positioned at the best grit/sand spreading temperature point along the cooled strip; and, likewise, the cooling roller with an embossed outer cooling surface can be positioned at the best embossing temperature point along the cooled strip.

Clearly, changes may be made to the system as described and illustrated herein without, however, departing from the scope of the present invention.

## Claims

1. A bituminous membrane production system (1) comprising a cooling/finishing station (4) designed to: receive a bituminous strip (12) made from at least one semisolid bituminous mix; feed the bituminous strip (12) in a given travelling direction (A); and cool at least one of the two major surfaces (13) of the bituminous strip (12) as it moves forward;
said cooling/finishing station (4) comprises at least one strip cooling device (14), in turn comprising :
- at least one cooling roller (15), which rotates about an axis (B) crosswise to said travelling direction (A) of the bituminous strip (12) and is positioned so that its outer cooling surface (16) is slightly spaced from a major surface (13) of the bituminous strip (12);
- a cooling fluid source (18), which cooperates with said cooling roller (15) to wet the outer cooling surface (16) of the cooling roller (15) with cooling fluid; and
- rotation means (19) for rotating the cooling roller (15) about said crosswise axis (B), so that, as the cooling roller (15) rotates, the cooling fluid on said outer cooling surface (16) is brought into contact with the major surface (13) of the bituminous strip (12); and
- an electronic control system (24), which controls said rotation means (19) to rotate the cooling roller (15) at such a rotation speed (v₁) that the cooling fluid adheres to and forms on said outer cooling surface (16) a surface layer (s) of cooling fluid, which, as the cooling roller (15) rotates, is brought into contact with the major surface (13) of the bituminous strip (12);
said system (1) being **characterized in that** the said electronic control system (24) controls the rotation means (19) so that the rotation speed (v₁) of the cooling roller (15) is lower than the travelling speed (v2) of the bituminous strip (12)

2. A system as claimed in Claim 1, wherein the cooling fluid source (18) comprises a cooling fluid tank (20); said cooling roller (15) being at least partly immersed in the cooling fluid in said tank (20).

3. A system as claimed in Claim 1, wherein the cooling fluid source (18) comprises sprinkling means (23) for sprinkling cooling fluid onto said outer cooling surface (16), so that the cooling fluid is evenly distributed over the portion of the outer cooling surface (16) intended to come into contact with the major surface (13) of the bituminous strip (12) for cooling.

4. A system as claimed in any one of Claims 1 to 3, wherein the cooling/finishing station (4) comprises at least one finishing device (27) for feeding a cover film (28) to said cooling device (14), so that, as the cooling roller (15) rotates, the cover film (28) is positioned with a mating face (28a) contacting the major surface (13) of the bituminous strip (12), and with the opposite face (28b) contacting the cooling fluid layer (s) on the outer cooling surface (16) of the cooling roller (15).

5. A system as claimed in any of previous Claims, wherein the cooling/finishing station (4) comprises at least one sensor (41) for measuring the temperature (t) of said bituminous strip (12) at a least one point; said electronic control system (24) controlling the rotation means (19) so that the rotation speed (v1) of the cooling roller (15) varies as a function of the temperature (t) measured.

6. A system as claimed in Claim 5, wherein said cooling/finishing station (4) comprises actuating means (38) for moving said cooling device (14) in said travelling direction (A); said electronic control system (24) controlling the actuating means (38) to move the cooling device (14) in said travelling direction (A) as a function of the temperature (t) of the bituminous strip (12).

7. A system as claimed in any one of the foregoing Claims, wherein said cooling/finishing station (4) comprises actuating means (38) for moving said cooling device (14) to and from the bituminous strip (12) in a direction (C) perpendicular to the plane of said bituminous strip (12); said electronic control system (24) controlling the actuating means (38) to move the cooling roller (15) between a work position, in which said outer cooling surface (16) skims the major surface (13) of the bituminous strip (12), and a rest position, in which the major surface (13) of the bituminous strip (12) is separated from the outer cooling surface (16) by a distance greater than the thickness of the cooling fluid layer (s).

8. A cooling/finishing station (4) designed to: receive a bituminous strip (12) made from at least one semisolid bituminous mix; feed the bituminous strip (12) in a given travelling direction (A); and cool at least one of the two major surfaces (13) of the bituminous strip (12) as it moves forward;
said cooling/finishing station (4) comprising at least one strip cooling device (14), in turn comprising:
- at least one cooling roller (15), which rotates about an axis (B) crosswise to said travelling direction (A) of the bituminous strip (12) and is arranged so that its outer cooling surface (16) is slightly spaced from a major surface (13) of the bituminous strip (12);
- a cooling fluid source (18), which cooperates with said cooling roller (15) to wet the outer cooling surface (16) of the cooling roller (15) with cooling fluid; and
- rotation means (19) for rotating the cooling roller (15) about said crosswise axis (B), so that, as the cooling roller (15) rotates, the cooling fluid on said outer cooling surface (16) is brought into contact with one of the major surfaces (13) of the bituminous strip (12);
an electronic control system (24), which controls said rotation means (19) to rotate the cooling roller (15) at such a rotation speed (v₁) that the cooling fluid adheres to and forms on said outer cooling surface (16) a surface layer (s) of cooling fluid, which, as the cooling roller (15) rotates, is brought into contact with the major surface (13) of the bituminous strip (12);
said cooling/finishing station (4) being **characterized in that** the said electronic control system (24) controls the rotation means (19) so that the rotation speed (v₁) of the cooling roller (15) is lower than the travelling speed (v2) of the bituminous strip (12)

9. A bituminous membrane production method comprising the steps of:
a) receiving a bituminous strip (12) made from a semisolid bituminous mix;
b) feeding the bituminous strip (12) in a given travelling direction (A); and
c) cooling at least one of the major surfaces (13) of the bituminous strip as it moves forward;
said step c) comprising the steps of:
- providing at least one cooling roller (15), which rotates about an axis (B) crosswise to said travelling direction (A) of the bituminous strip (12) and is arranged so that its outer cooling surface (16) is slightly spaced from a major surface (13) of the bituminous strip (12);
- wetting the outer cooling surface of the cooling roller with a cooling fluid; and
- rotating the cooling roller (15) about said crosswise axis (B), so that the cooling fluid on said outer cooling surface (16) comes into contact with one of the major surfaces (13) of the bituminous strip (12) as the cooling roller (15) rotates;
- controlling the rotation speed of the cooling roller (15) at a rotation speed (v₁) so that the cooling fluid adheres to and forms on said outer cooling surface (16) a surface layer (s) of cooling fluid, which, as the cooling roller (15) rotates, is brought into contact with the major surface (13) of the bituminous strip (12);
said method being **characterized in that** said step c) comprises the step of rotating the cooling roller (15) at a rotation speed (v1) lower than the travelling speed (v2) of the bituminous strip (12).

10. Method according to claim 9, comprising the step of providing a cooling fluid tank (20); and positioning the cooling roller (15) in the tank (20) so that the cooling roller (15) is at least partly immersed in the cooling fluid in the tank (20).

11. Method according to claim 9, comprising the step of: providing sprinkling means (23) for sprinkling the cooling fluid onto said outer cooling surface (16), so that the cooling fluid is evenly distributed over the portion of the outer cooling surface (16) intended to contact said major surface 13) of the bituminous strip (12) for cooling.

12. Method according to any of previous claims from 9 to 11, comprising the step of providing a finishing device (27) designed to feed a cover film (28) onto the cooling roller (15), so that, as the cooling roller (15) rotates, a mating face (28a) of the cover film (28) is positioned contacting the major surface (13) of the bituminous strip (12), and the opposite face (28b) is positioned contacting the cooling fluid layer (s) on the outer cooling surface (16) of the cooling roller (15).

13. Method according to any of the previous claim from 9 to 12, comprising the step of measuring the temperature (t) of the bituminous strip (12) at a least one point; and adjusting the rotation speed (v1) of the cooling roller (15) based on the temperature (t) measured.

## Patentansprüche

1. Herstellungssystem (1) für eine bitumenhaltige Membran, umfassend eine Kühl/Endfertigungs-Station (4), eingerichtet zum:
Empfangen eines bitumenhaltigen Streifens (12), hergestellt aus mindestens einem halbfesten bitumenhaltigen Gemisch;
Zuführen des bitumenhaltigen Streifens (12) in einer vorgegebene Fahrtrichtung (A); und
Kühlen mindestens einer der zwei Hauptoberflächen (13) des bitumenhaltigen Streifens (12), während er sich vorwärts bewegt;
wobei die Kühl/Endfertigungs-Station (4) mindestens eine Streifenkühlvorrichtung (14) umfasst, wiederum umfassend:
- mindestens eine Kühlwalze (15), welche um eine Achse (B) quer zu der Fahrtrichtung (A) des bitumenhaltigen Streifens (12) rotiert und derart angeordnet ist, dass ihre äußere Kühloberfläche (16) geringfügig von einer Hauptoberfläche (13) des bitumenhaltigen Streifens (12) beabstandet ist;
- eine Kühlfluidquelle (18), welche mit der Kühlwalze (15) zusammenwirkt, um die äußere Kühloberfläche (16) der Kühlwalze (15) mit Kühlfluid zu benetzen; und
- Rotationsmittel (19) zum Rotieren der Kühlwalze (15) um die Querachse (B), so dass, während die Kühlwalze (15) rotiert, das Kühlfluid auf der äußeren Kühloberfläche (16) mit der Hauptoberfläche (13) des bitumenhaltigen Streifens (12) in Kontakt gebracht wird; und
- ein elektronisches Steuer- bzw. Regelsystem (24), welche das bzw. die Rotationsmittel (19) steuert bzw. regelt, um die Kühlwalze (15) mit einer solchen Rotationsgeschwindigkeit (v₁) zu rotieren, dass das Kühlfluid an der äußeren Kühloberfläche (16) haftet und darauf eine Oberflächenschicht (s) aus Kühlfluid bildet, welche, während die Kühlwalze (15) rotiert, mit der Hauptoberfläche (13) des bitumenhaltigen Streifens (12) in Kontakt gebracht wird;
- wobei das System (1) **dadurch gekennzeichnet ist, dass** das elektronische Steuersystem (24) das bzw. die Rotationsmittel (19) steuert, so dass die Rotationsgeschwindigkeit (v₁) der Kühlwalze (15) niedriger ist als die Fahrtgeschwindigkeit (v₂) des bitumenhaltigen Streifens (12).

2. System nach Anspruch 1, wobei die Kühlfluidquelle (18) einen Kühlfluidtank (20) umfasst; wobei die Kühlwalze (15) zumindest teilweise in das Kühlfluid in dem Tank (20) eingetaucht ist.

3. System nach Anspruch 1, wobei die Kühlfluidquelle (18) Besprühmittel (23) zum Besprühen von Kühlfluid auf die äußerste Kühloberfläche (16) umfasst, so dass das Kühlfluid gleichmäßig über den Bereich der äußeren Kühloberfläche (16) verteilt wird, welcher mit der Hauptoberfläche (13) des bitumenhaltigen Streifens (12) zum Kühlen in Kontakt kommen soll.

4. System nach einem der Ansprüche 1 bis 3, wobei die Kühl/Endfertigungsstation (4) mindestens eine Endfertigungsvorrichtung (27) zum Zuführen eines Deckfilms (28) zu der Kühlvorrichtung (14) umfasst, so dass, während die Kühlwalze (15) rotiert, der Deckfilm (28) mit einer Berührungsfläche (28a) angeordnet ist, welche mit der Hauptoberfläche (13) des bitumenhaltigen Streifens (12) in Kontakt ist, und wobei die entgegengesetzten Seite (28b) mit der Kühlfluidschicht (s) auf der äußeren Kühloberfläche (16) der Kühlwalze (15) in Kontakt ist.

5. System nach einem der vorhergehenden Ansprüche, wobei die Kühl/Endfertigungsstation (4) mindestens einen Sensor (41) zum Messen der Temperatur (t) des bitumenhaltigen Streifens (12) an mindestens einem Punkt umfasst; wobei das elektronische Steuersystem (24) das bzw. die Rotationsmittel (19) steuert, so dass die Rotationsgeschwindigkeit (v₁) der Kühlwalze (15) als eine Funktion der gemessenen Temperatur (t) variiert.

6. System nach Anspruch 5, wobei die Kühl/Endfertigungsstation (4) Betätigungsmittel (38) zur Bewegung der Kühlvorrichtung (14) in der Fahrtrichtung (A) umfasst; wobei das elektronische Steuersystem (24) das bzw. die Betätigungsmittel (38) steuert, um die Kühlvorrichtung (14) in der Fahrtrichtung (A) als eine Funktion der Temperatur (t) des bitumenhaltigen Streifens (12) zu bewegen.

7. System nach einem der vorhergehenden Ansprüche, wobei die Kühl/Endfertigungsstation (4) Betätigungsmittel (38) zur Bewegung der Kühlvorrichtung (14) zu und von dem bitumenhaltigen Streifen (12) in einer Richtung (C) senkrecht zu der Ebene des bitumenhaltigen Streifens (12) umfasst; wobei das elektronische Steuersystem (24) das bzw. die Betätigungsmittel (38) zur Bewegung der Kühlwalze (15) zwischen einer Arbeitsposition, in welcher die äußere Kühloberfläche (16) die Hauptoberfläche (13) des bitumenhaltigen Streifens (12) abstreicht, und einer Ruheposition, in welcher die Hauptoberfläche (13) des bitumenhaltigen Streifens (12) von der äußeren Kühloberfläche (16) durch einen Abstand getrennt ist, welcher größer als die Dicke der Kühlfluidschicht (s) ist, steuert.

8. Kühl/Endfertigungsstation (4), eingerichtet zum:
Empfangen eines bitumenhaltigen Streifens (12), hergestellt aus mindestens einem halbfesten bitumenhaltigen Gemisch;
Zuführen des bitumenhaltigen Streifens (12) in einer vorgegebenen Fahrtrichtung (A); und
Kühlen mindestens einer der zwei Hauptoberflächen (13) des bitumenhaltigen Streifens (12), während er sich vorwärts bewegt;
wobei die Kühl/Endfertigungsstation (4) mindestens eine Streifenkühlvorrichtung (14) umfasst, wiederum umfassend:
- mindestens eine Kühlwalze (15), welche um eine Achse (B) quer zu der Fahrtrichtung (A) des bitumenhaltigen Streifens (12) rotiert und angeordnet ist, so dass ihre äußere Kühloberfläche (16) geringfügig von einer Hauptoberfläche (13) des bitumenhaltigen Streifens (12) beabstandet ist;
- eine Kühlfluidquelle (18), welche mit der Kühlwalze (15) zusammenwirkt, um die äußere Kühloberfläche (16) der Kühlwalze (15) mit Kühlfluid zu benetzen; und
- Rotationsmittel (19) zum Rotieren der Kühlwalze (15) um die Querachse (B), so dass, während die Kühlwalze (15) rotiert, das Kühlfluid auf der äußeren Kühloberfläche (16) mit einer der Hauptoberflächen (13) des bitumenhaltigen Streifens (12) in Kontakt gebracht wird;
ein elektronisches Steuer- bzw. Regelsystem (24), welches das bzw. die Rotationsmittel (19) steuert bzw. regelt, um die Kühlwalze (15) mit einer solchen Rotationsgeschwindigkeit (v₁) zu rotieren, dass das Kühlfluid an der äußeren Kühloberfläche (16) haftet und darauf eine Oberflächenschicht (s) aus Kühlfluid bildet, welche, während die Kühlwalze (15) rotiert, mit der Hauptoberfläche (13) des bitumenhaltigen Streifens (12) in Kontakt gebracht wird;
wobei die Kühl/Endfertigungsstation (4) **dadurch gekennzeichnet ist, dass** das elektronische Steuersystem (24) das bzw. die Rotationsmittel (19) steuert, so dass die Rotationsgeschwindigkeiten (v₁) der Kühlwalze (15) niedriger ist als die Fahrtgeschwindigkeit (v₂) des bitumenhaltigen Streifens (12).

9. Herstellungsverfahren für eine bitumenhaltige Membran, umfassend die Schritte:
a) Empfangen eines bitumenhaltingen Streifens (12), hergestellt aus einem halbfesten bitumenhaltigen Gemisch;
b) Zuführen des bitumenhaltigen Streifens (12) in einer vorgegebenen Fahrtrichtung (A); und
c) Kühlen mindestens einer der Hauptoberflächen (13) des bitumenhaltigen Streifens, während er sich vorwärts bewegt;
wobei der Schritt c) die Schritte umfasst:
- Bereitstellen mindestens einer Kühlwalze (15), welche um eine Achse (B) quer zu der Fahrtrichtung (A) des bitumenhaltigen Streifens (12) rotiert und angeordnet ist, so dass ihre äußere Kühloberfläche (16) geringfügig von einer Hauptoberfläche (13) des bitumenhaltigen Streifens (12) beabstandet ist;
- Benetzen der äußeren Kühloberfläche der Kühlwalze mit einem Kühlfluid; und
- Rotieren der Kühlwalze (15) um die Querachse (B), so dass das Kühlfluid auf der äußeren Kühloberfläche (16) mit einer der Hauptoberflächen (13) bitumenhaltigen Streifens (12) in Kontakt kommt, während die Kühlwalze (15) rotiert;
- Steuern bzw. Regeln der Rotationsgeschwindigkeit der Kühlwalze (15) mit einer Rotationsgeschwindigkeit (v₁), so dass das Kühlfluid an der äußeren Kühloberfläche (16) haftet und darauf eine Oberflächenschicht (s) aus Kühlfluid bildet, welche, während die Kühlwalze (15) rotiert, mit der Hauptoberfläche (13) des bitumenhaltigen Streifens (12) in Kontakt gebracht wird;
wobei das Verfahren **dadurch gekennzeichnet ist, dass** der Schritt c) den Schritt des Rotierens der Kühlwalze (15) mit einer Rotationsgeschwindigkeit (v₁) umfasst, welche niedriger ist als die Fahrtgeschwindigkeit (v₂) des bitumenhaltigen Streifens (12).

10. Verfahren nach Anspruch 9, umfassend die Schritte des Bereitstellens eines Kühlfluidtanks (20); und des Anordnens der Kühlwalze (15) in dem Tank (20), so dass die Kühlwalze (15) zumindest teilweise in das Kühlfluid in dem Tank (20) eingetaucht ist.

11. Verfahren nach Anspruch 9, umfassend die Schritte:
Bereitstellen eines Sprühmittels (23) zum Sprühen des Kühlfluids auf die äußere Kühloberfläche (16), so dass das Kühlfluid gleichmäßig über den Bereich der äußeren Kühloberfläche (16) verteilt ist, welche mit der Hauptoberfläche (13) des bitumenhaltigen Streifens (12) zum Kühlen in Kontakt kommen soll.

12. Verfahren nach einem der vorhergehenden Ansprüche 9 bis 11, umfassend den Schritt des Bereitstellens einer Endfertigungsvorrichtung (27), welche eingerichtet ist, einen Deckfilm (28) auf die Kühlwalze (15) zuzuführen, so dass, während die Kühlwalze (15) rotiert, eine Berührungsfläche (28a) des Deckfilms (28) angeordnet ist, um mit der Hauptoberfläche (13) des bitumenhaltigen Streifens (12) in Kontakt zu treten, und wobei die entgegengesetzte Fläche (28b) angeordnet ist, mit der Kühlfluidschicht (s) der äußeren Kühloberfläche (16) Kühlwalze (15) in Kontakt zu treten.

13. Verfahren nach einem der vorhergehenden Ansprüche 9 bis 12, umfassend den Schritt des Messens der Temperatur (t) des bitumenhaltigen Streifens (12) an mindestens einem Punkt; und das Einstellen der Rotationsgeschwindigkeit (v₁) der Kühlwalze (15), basierend auf der gemessenen Temperatur (t).

## Revendications

1. Système de production d'une membrane bitumineuse (1) comprenant une station de refroidissement/finition (4) conçue pour : recevoir une bande bitumineuse (12) réalisée à partir d'au moins un mélange bitumineux semi-solide ; alimenter la bande bitumineuse (12) dans une direction de déplacement donnée (A) ; et refroidir au moins une des deux surfaces majeures (13) de la bande bitumineuse (12) quand elle avance ;
ladite station de refroidissement/finition (4) comprenant au moins un dispositif de refroidissement de bande (14), comprenant à son tour :
- au moins un cylindre de refroidissement (15) qui tourne autour d'un axe (B) transversalement à ladite direction de déplacement (A) de la bande bitumineuse (12) et qui est positionné de sorte que sa surface de refroidissement extérieure (16) est légèrement espacée d'une surface majeure (13) de la bande bitumineuse (12) ;
- une source de liquide de refroidissement (18) qui coopère avec ledit cylindre de refroidissement (15) pour humidifier la surface de refroidissement extérieure (16) du cylindre de refroidissement (15) avec le fluide de refroidissement ; et
- des moyens de rotation (19) pour faire tourner le cylindre de refroidissement (15) autour dudit axe transversal (B), de sorte que, lorsque le cylindre de refroidissement (15) tourne, le fluide de refroidissement sur ladite surface de refroidissement extérieure (16) soit mise en contact avec la surface majeure (13) de la bande bitumineuse (12) ; et
- un système de commande électronique (24) qui commande lesdits moyens de rotation (19) afin qu'ils fassent tourner le cylindre de refroidissement (15) à une vitesse de rotation telle (v₁) que le fluide de refroidissement adhère et forme sur ladite surface de refroidissement extérieure (16) une couche de surface (s) du fluide de refroidissement, qui, lorsque le cylindre de refroidissement (15) tourne, est mise en contact avec la surface majeure (13) de la bande bitumineuse (12) ;
ledit système (1) étant **caractérisé en ce que** ledit système de commande électronique (24) commande les moyens de rotation (19) de sorte que la vitesse de rotation (v₁) du cylindre de refroidissement (15) soit inférieure à la vitesse de déplacement (v₂) de la bande bitumineuse (12).

2. Système selon la revendication 1, dans lequel la source de fluide de refroidissement (18) comprend un réservoir de fluide de refroidissement (20) ; ledit cylindre de refroidissement (15) étant au moins partiellement immergé dans le fluide de refroidissement dans ledit réservoir (20).

3. Système selon la revendication 1, dans lequel la source de fluide de refroidissement (18) comprend des moyens de pulvérisation (23) pour pulvériser le fluide de refroidissement sur ladite surface de refroidissement extérieure (16), de sorte que le fluide de refroidissement soit uniformément distribué sur la partie de la surface de refroidissement extérieure (16) destinée à entrer en contact avec la surface majeure (13) de la bande bitumineuse (12) pour le refroidissement.

4. Système selon l'une quelconque des revendications 1 à 3, dans lequel la station de refroidissement/finition (4) comprend au moins un dispositif de finition (27) pour alimenter un film de couverture (28) sur ledit dispositif de refroidissement (14), de sorte que, lorsque le cylindre de refroidissement (15) tourne, le film de couverture (28) soit positionné avec une face d'appariement (28a) en contact avec la surface majeure (13) de la bande bitumineuse (12), et avec la face opposée (28b) en contact avec la couche de fluide de refroidissement (s) sur la surface de refroidissement extérieure (16) du cylindre de refroidissement (15).

5. Système selon l'une quelconque des revendications précédentes, dans lequel la station de refroidissement/finition (4) comprend au moins un capteur (41) pour mesurer la température (t) de ladite bande bitumineuse (12) au moins en un point ; ledit système de commande électronique (24) commandant les moyens de rotation (19) de sorte que la vitesse de rotation (v1) du cylindre de refroidissement (15) varie en fonction de la température (t) mesurée.

6. Système selon la revendication 5, dans lequel ladite station de refroidissement/finition (4) comprend des moyens d'actionnement (38) pour déplacer ledit dispositif de refroidissement (14) dans ladite direction de déplacement (A) ; ledit système de commande électronique (24) commandant les moyens d'actionnement (38) pour déplacer le dispositif de refroidissement (14) dans ladite direction de déplacement (A), en fonction de la température (t) de la bande bitumineuse (12).

7. Système selon l'une quelconque des revendications précédentes, dans lequel ladite station de refroidissement/finition (4) comprend des moyens d'actionnement (38) pour déplacer ledit dispositif de refroidissement (14) vers et depuis la bande bitumineuse (12), dans une direction (C) perpendiculaire au plan de ladite bande bitumineuse (12) ; ledit système de commande électronique (24) commandant les moyens d'actionnement (38) pour déplacer le cylindre de refroidissement (15) entre une position de travail, dans laquelle ladite surface de refroidissement extérieure (16) rectifie la surface majeure (13) de la bande bitumineuse (12) et une position de repos dans laquelle la surface majeure (13) de la bande bitumineuse (12) est séparée de la surface de refroidissement extérieure (16) d'une distance supérieure à l'épaisseur de la couche de fluide de refroidissement (s).

8. Station de refroidissement/finition (4) conçue pour : recevoir une bande bitumineuse (12) réalisée à partir d'au moins un mélange bitumineux semi-solide ; alimenter la bande bitumineuse (12) dans une direction de déplacement donnée (A) ; et refroidir au moins une des deux surfaces majeures (13) de la bande bitumineuse (12) quand elle avance ;
ladite station de refroidissement/finition (4) comprenant au moins un dispositif de refroidissement de bande (14), comprenant à son tour :
- au moins un cylindre de refroidissement (15) qui tourne autour d'un axe (B) transversalement à ladite direction de déplacement (A) de la bande bitumineuse (12) et est disposé de sorte que sa surface de refroidissement extérieure (16) soit légèrement espacée d'une surface majeure (13) de la bande bitumineuse (12) ;
- une source de fluide de refroidissement (18), qui coopère avec ledit cylindre de refroidissement (15) pour humidifier la surface de refroidissement extérieure (16) du cylindre de refroidissement (15) avec du fluide de refroidissement ; et
- des moyens de rotation (19) pour faire tourner le cylindre de refroidissement (15) autour dudit axe transversal (B), de sorte que, lorsque le cylindre de refroidissement (15) tourne, le fluide de refroidissement sur ladite surface de refroidissement extérieure (16) soit mis en contact avec une des surfaces majeures (13) de la bande bitumineuse (12) ;
un système de commande électronique (24) qui commande lesdits moyens de rotation (19) pour faire tourner le cylindre de refroidissement (15) à une vitesse de rotation (v₁) telle que le fluide de refroidissement adhère à et forme sur ladite surface de refroidissement extérieure (16) une couche de surface (s) du fluide de refroidissement, qui, lorsque le cylindre de refroidissement (15) tourne, est mise en contact avec la surface majeure (13) de la bande bitumineuse (12) ;
ladite station de refroidissement/finition (4) étant **caractérisée en ce que** ledit système de commande électronique (24) commande les moyens de rotation (19) de sorte que la vitesse de rotation (v₁) du cylindre de refroidissement (15) soit inférieure à la vitesse de déplacement (v2) de la bande bitumineuse (12).

9. Procédé de production de membrane bitumineuse comprenant les étapes consistant à :
a) recevoir une bande bitumineuse (12) réalisée à partir d'un mélange bitumineux semi-solide ;
b) alimenter la bande bitumineuse (12) dans une direction de déplacement donnée (A) ; et
c) refroidir au moins une des surfaces majeures (13) de la bande bitumineuse quand elle avance ;
ladite étape c) comprenant les étapes consistant à :
- fournir au moins un cylindre de refroidissement (15), qui tourne autour d'un axe (B) transversalement à ladite direction de déplacement (A) de la bande bitumineuse (12) et est disposé de sorte que sa surface de refroidissement extérieure (16) est légèrement espacée d'une surface majeure (13) de la bande bitumineuse (12) ;
- humidifier la surface de refroidissement extérieure du cylindre de refroidissement avec un fluide de refroidissement ; et
- faire tourner le cylindre de refroidissement (15) autour dudit axe transversal (B), de sorte que le fluide de refroidissement sur ladite surface de refroidissement extérieure (16) entre en contact avec une des surfaces majeures (13) de la bande bitumineuse (12) quand le cylindre de refroidissement (15) tourne ;
- commander la vitesse de rotation du cylindre de refroidissement (15) à une vitesse de rotation (v₁) de sorte que le fluide de refroidissement adhère à et forme sur ladite surface de refroidissement extérieure (16) une couche de surface (s) du fluide de refroidissement, qui, lorsque le cylindre de refroidissement (15) tourne, est mise en contact avec la surface majeure (13) de la bande bitumineuse (12) ;
ledit procédé étant **caractérisé en ce que** ladite étape c) comprend l'étape consistant à faire tourner le cylindre de refroidissement (15) à une vitesse de rotation (v1) inférieure à la vitesse de déplacement (v2) de la bande bitumineuse (12).

10. Procédé selon la revendication 9, comprenant l'étape consistant à fournir un réservoir de fluide de refroidissement (20) ; et à positionner le cylindre de refroidissement (15) dans le réservoir (20) de sorte que le cylindre de refroidissement (15) soit au moins partiellement immergé dans le fluide de refroidissement dans le réservoir (20).

11. Procédé selon la revendication 9, comprenant l'étape consistant à : fournir des moyens de pulvérisation (23) pour pulvériser le fluide de refroidissement sur ladite surface de refroidissement extérieure (16), de sorte que le fluide de refroidissement soit uniformément réparti sur la partie de la surface de refroidissement extérieure (16) destinée à entrer en contact avec ladite surface majeure (13) de la bande bitumineuse (12) pour le refroidissement.

12. Procédé selon l'une quelconque des revendications de 9 à 11 précédentes, comprenant l'étape consistant à fournir un dispositif de finition (27), conçu pour alimenter un film de couverture (28) sur le cylindre de refroidissement (15), de sorte que, lorsque le cylindre de refroidissement (15) tourne, une face d'appariement (28a) du film de couverture (28) soit positionnée en contact avec la surface majeure (13) de la bande bitumineuse (12) et la face opposée (28b) soit positionnée en contact avec la couche de fluide de refroidissement (s) sur la surface de refroidissement extérieure (16) du cylindre de refroidissement (15).

13. Procédé selon l'une quelconque des revendications précédentes 9 à 12, comprenant l'étape consistant à mesurer la température (t) de la bande bitumineuse (12) au moins en un point ; et à ajuster la vitesse de rotation (v1) du cylindre de refroidissement (15) sur la base de la température (t) mesurée.
